# EUROPEAN PATENT APPLICATION

(11) **EP 4 682 528 A1**
(43) Date of publication of application: **21.01.2026**
(21) Application number: 24770564.3
(22) Date of filing: 01.03.2024
(51) Int. Cl.: G01N 27/28, G01N 27/333, G01N 27/416

(54) **ELECTROLYTE CONCENTRATION MEASURING METHOD**

(30) Priority: 15.03.2023 JP 2023040808
(71) Applicant: Canon Kabushiki Kaisha, Tokyo, 146-8501 (JP)
(72) Inventor: YAMAMOTO, Takeshi, Tokyo 146-8501 (JP); MIYAZAKI, Keiji, Tokyo 146-8501 (JP); MIURA, Jun, Tokyo 146-8501 (JP); ENOKIDO, Fuka, Tokyo 146-8501 (JP); MAEDA, Harunobu, Tokyo 146-8501 (JP); TANAKA, Masanori, Tokyo 146-8501 (JP); FUKATSU, Makoto, Tokyo 146-8501 (JP)
(74) Representative: TBK
(86) International application number: PCT/JP2024/007711
(87) International publication number: WO 2024/190453

(57) **Abstract**

The present invention relates to an electrolyte concentration measuring method that has a simple configuration, does not require effort and time for measurement, enables stable measurement, and enables measurement with a small amount of sample. The present invention relates to an electrolyte concentration measuring method including a first step of dispensing a standard solution of known concentration into a channel region and obtaining, after the standard solution has reached a reference electrode and a working electrode, first potential difference information based on a potential difference between the reference electrode and the working electrode, a second step of dispensing a sample onto the working electrode or near the working electrode and obtaining second potential difference information based on a potential difference between the reference electrode and the working electrode, and a step of obtaining data on an electrolyte concentration of the sample using the first potential difference information and the second potential difference information.

## Description

### Technical Field

The present invention relates to an electrolyte concentration measuring method using a measuring device in which a channel is formed inside a porous substrate.

### Background Art

In recent years, the development of microchannel devices that can efficiently (in micro-amounts, quickly, and easily) perform biochemical analysis in a single chip using a micro-sized microchannel has attracted attention in a wide variety of fields such as biochemical research, medical care, drug discovery, health care, environment, and food.

In particular, paper microanalytical chips (µPADs), which are based on paper, are advantageous in that paper, an inexpensive material, is used as their substrate, and by using the capillary action of paper itself, a sample or a liquid specimen can be driven without using electricity. In addition, paper microanalytical chips are advantageous also in that they are small, low-cost, easy to carry, and highly disposable (completely disposed of simply by burning).
Thus, using a paper microanalytical chip allows anyone to perform a POC (point of care) diagnostic test easily and at low cost. Hence, paper microanalytical chips are expected all over the world as testing devices for medical activities in developing countries and remote rural areas where sufficient medical facilities are not provided, disaster sites, etc. and at airports and the like where the spread of infectious diseases must be stopped at borders. Paper microanalytical chips have been attracting attention also as health care devices that enable control and monitoring of one's own health conditions and various pathological diagnosis devices at ordinary clinical sites.

One biochemical test in pathologic diagnosis is electrolyte measurement. In the electrolyte measurement as a biochemical test, ion concentrations (Na⁺, K⁺, Cl⁻, etc.) in blood or urine are measured, and "the ion concentration balance in the body" can be determined. The electrolyte measurement also enables screening of diseases, and further enables checking of physiological functions (vital status) of patients at disaster sites and the like, thus being a very important test.

As an example of a paper microanalytical chip, PTL 1 proposes a system including a microanalytical chip that enables a potential difference measurement using a porous substrate. It is disclosed that one or more working electrodes and one reference electrode are provided on a porous substrate, the electrodes being constituted by two electrodes, that is, a reference electrode that exhibits a fixed potential based on a reference solution and an ion-selective electrode that exhibits a potential corresponding to the ion concentration of a sample, and the ion concentration of the sample is measured by measuring the potential difference between the two electrodes.

PTL 2 discloses that a calibration member having a standard solution holder made of a water-absorbing material is provided such that the standard solution holder and the ion sensor including an ion sensitive membrane are movable toward and away from each other, and measurement and calibration can be performed while the standard solution for calibration is held by the standard solution holder with the standard solution holder being in contact with the ion sensor, and that the standard solution is removed by removing the calibration member, and then measurement of a sample solution and correction are performed, thus reducing variation among analytical chips.

### Citation List

### Patent Literature

PTL 1: U.S. Patent Application Publication No. 2016/033438
PTL 2: Japanese Patent Laid-Open No. 3-100452

### Summary of Invention

### Technical Problem

Paper microanalytical chips are disposable (throwaway) testing devices intended for one-time measurement as in the case of influenza tests and pregnancy tests which are performed by so-called immunochromatography, and thus it is important that there be little variation among the devices.

However, there may be some differences in the condition of the devices due to differences in manufacturing conditions (e.g., lot-to-lot differences in materials used, the condition of applicators, and environmental differences at the time of manufacturing). Accordingly, when several of the completed devices are selected and subjected to measurement of an ion having the same concentration, there may be differences in measured potential. Usually, the differences are slight, but it is an extremely important problem in electrolyte measurement which requires very high repeatability.

Although the method described in PTL 2 is a means for solving this variation, there is a need for methods that are less costly and do not require effort and time for measurement.

### Solution to Problem

The present invention relates to an electrolyte concentration measuring method that has a simple configuration, does not require effort and time for measurement, enables stable measurement, and enables measurement with a small amount of sample.

Specifically, the present invention relates to an electrolyte concentration measuring method that is a measuring method for measuring an electrolyte concentration of a sample using a measuring device, wherein
the measuring device has a channel region defined by a channel wall provided inside a porous substrate,
   the channel region includes a first region, a second region, and a channel connecting the first region and the second region,
   a working electrode is disposed in the first region, and
   a reference electrode is disposed in the second region,
the measuring method including:
   a first step of dispensing a standard solution of known concentration into the channel region and obtaining, after the standard solution has reached the reference electrode and the working electrode, first potential difference information based on a potential difference between the reference electrode and the working electrode;
   a second step of dispensing the sample onto the working electrode or near the working electrode and obtaining second potential difference information based on a potential difference between the reference electrode and the working electrode; and
   a step of obtaining electrolyte concentration data of the sample using the first potential difference information and the second potential difference information. Advantageous Effects of Invention

According to the present invention, an electrolyte concentration measuring method that has a simple configuration, does not require effort and time for measurement, enables stable measurement, and enables measurement with a small amount of sample can be provided.

### Brief Description of Drawings

[Fig. 1A] Fig. 1A shows a channel configuration of a measuring device (paper microanalytical chip).
[Fig. 1B] Fig. 1B shows an example of a configuration of the measuring device.
[Fig. 2] Fig. 2 shows an example of a measurement in a first step.
[Fig. 3] Fig. 3 shows an example of measurement results in the first step.
[Fig. 4] Fig. 4 is an example of a measurement in a second step.
[Fig. 5] Fig. 5 is an example of measurement results including those of the second measurement.

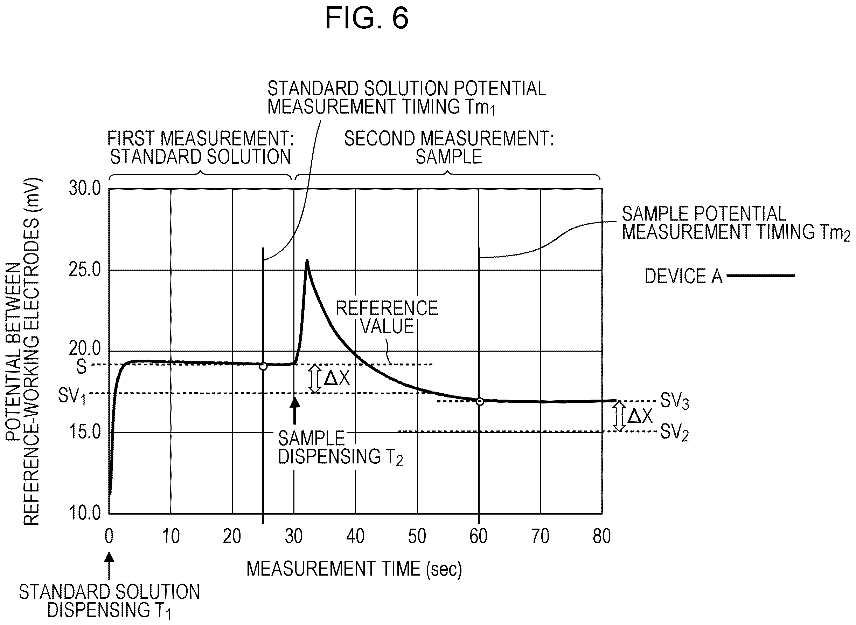

[Fig. 6] Fig. 6 shows an example of potential difference correction.
[Fig. 7] Fig. 7 shows measurement results in Example 1.

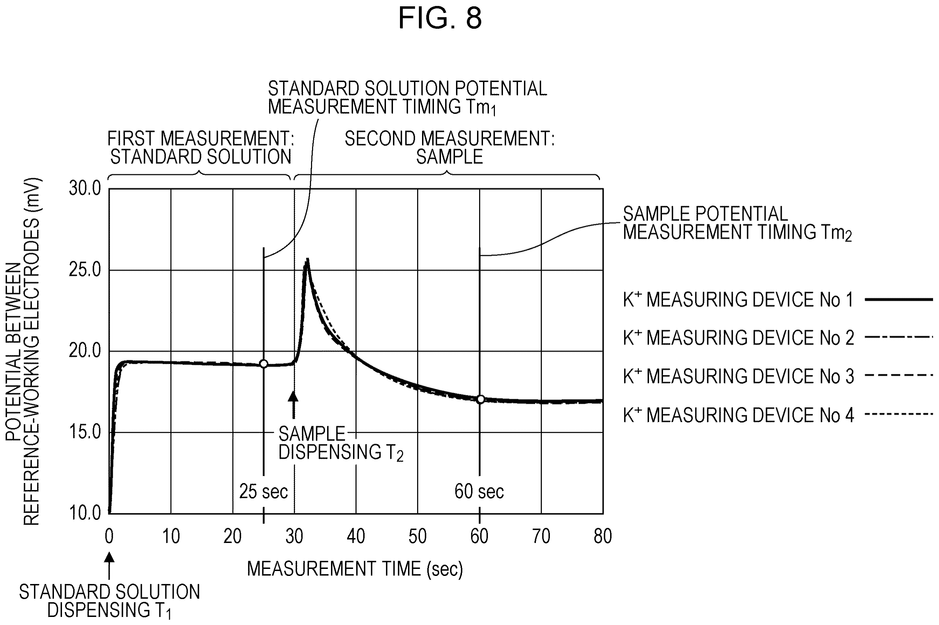

[Fig. 8] Fig. 8 shows correction results in Example 1.
[Fig. 9] Fig. 9 shows measurement results in Example 2.

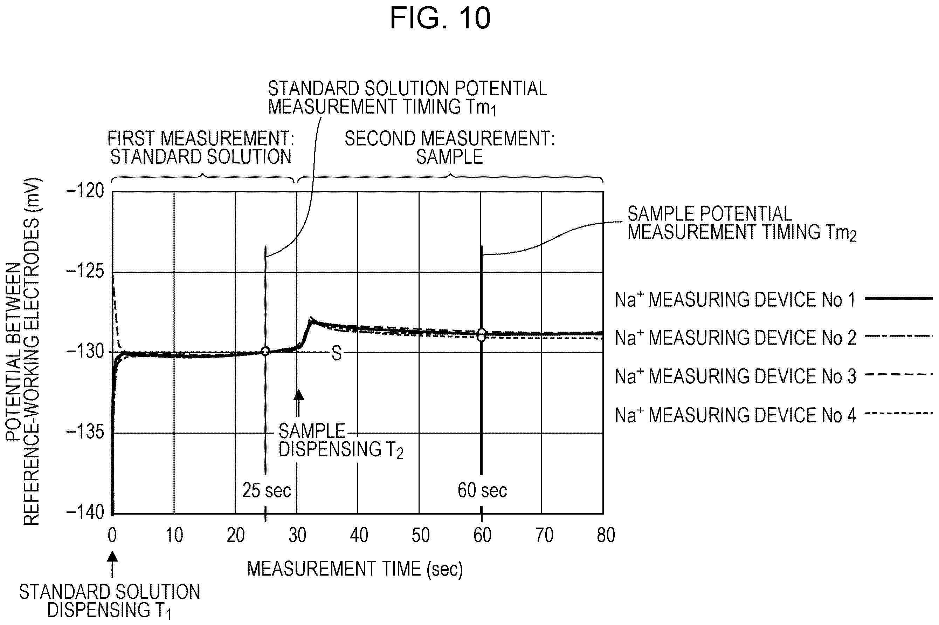

[Fig. 10] Fig. 10 shows correction results in Example 2.
[Fig. 11] Fig. 11 shows measurement results in Example 3.

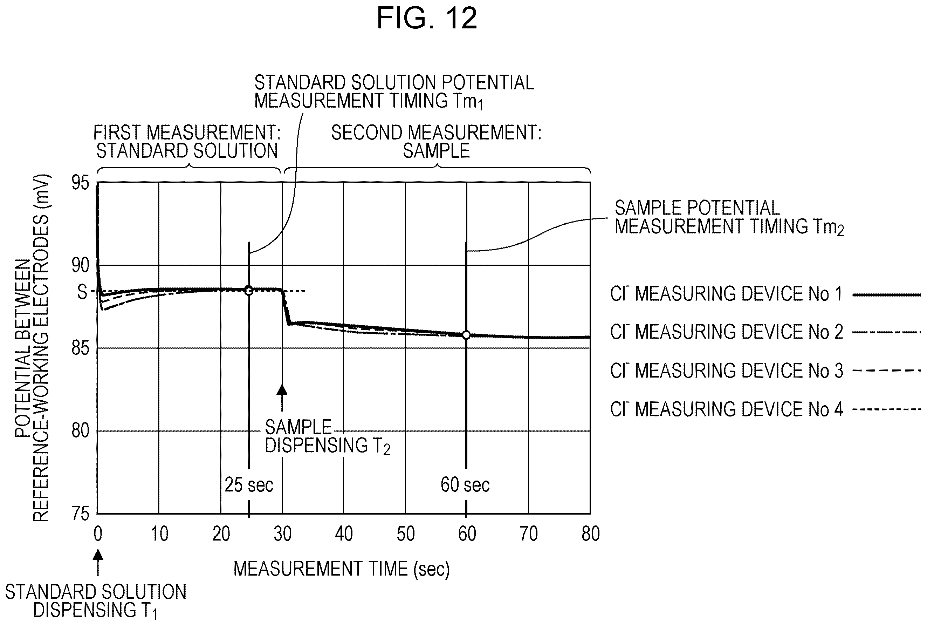

[Fig. 12] Fig. 12 shows correction results in Example 3.
[Fig. 13] Fig. 13 shows another example of a channel configuration of a measuring device (paper microanalytical chip).

### Description of Embodiments

Hereinafter, exemplary embodiments of the present invention will be described with reference to the drawings. The following embodiments are given for illustration, and the present invention is not limited to the contents of the embodiments. In the following figures, components not necessary for the description of the embodiments are mentioned only with their names.

Although the gist of the present invention is not limited to the following configuration, a measuring method for measuring an electrolyte concentration of a sample using a measuring device will be described.

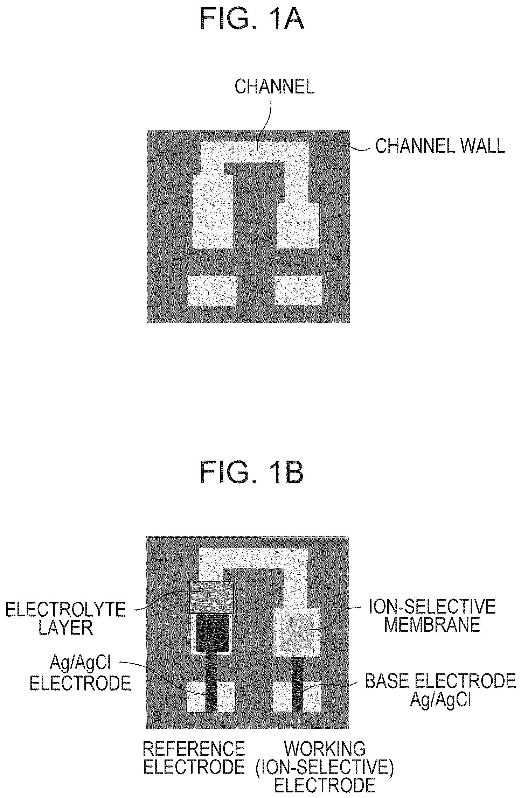

In the measuring device, a channel wall is formed inside paper such as filter paper as a porous substrate. The channel wall can be formed by electrophotography or the like in a manner that a channel pattern is formed on a surface of the porous substrate using a hydrophobic material (e.g., a resin component), and the hydrophobic material is then melted to permeate the porous substrate. That is, the channel wall can be formed by filling pores of the porous substrate with the hydrophobic material. By being defined by the channel wall, a channel region is formed (Fig. 1A). The channel region includes a first region, a second region, and a channel connecting the first region and the second region, a working electrode is disposed in the first region, and a reference electrode is disposed in the second region (Fig. 1B). A configuration in which a very small gap is provided to divide the channel region is also possible, and if it is an electrically connectable configuration, such a configuration is also considered as being "connected by a channel" in the present invention.

The working electrode (ion-selective electrode) may be a base electrode: Ag/AgCl electrode printed by screen printing or the like. On the base electrode, an ion-selective membrane corresponding to the ion to be measured is preferably laminated. An intermediate layer of a chloride such as KCl or NaCl may be applied between the ion-selective membrane and the base electrode.

Although the description will be given in the context of a device in which an ion-selective membrane for K⁺ ions which selectively takes up K⁺ ions is used as an ion-selective membrane, other ion-selective membranes can also be used.

The reference electrode, as with the working electrode, may be a Ag/AgCl electrode. An electrolyte layer of a chloride such as KCl or NaCl may be provided on the channel upstream of the reference electrode (upstream relative to the sample flow). When the electrolyte layer is provided, the electrolyte (chloride) is dissolved by a solution (standard solution, sample) flowing through the channel, and the solution (standard solution, sample) is supplied to the reference electrode with the chloride ion concentration in the solution being saturated. This stabilizes the potential of the reference electrode.

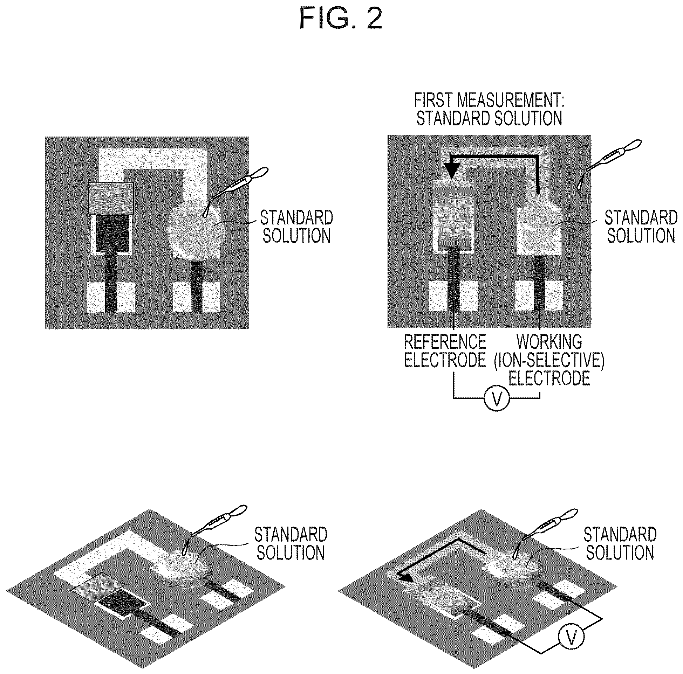

Next, an electrolyte concentration measurement using a measuring device having such a configuration will be described with reference to Fig. 2.

### <First Potential Difference Measurement (First Step)>

First, a standard solution of known ion concentration is dispensed into the channel region of the device (Fig. 2(a)). The standard solution is a solution containing a predetermined amount of an electrolyte whose electrolyte concentration is to be measured with the working electrode. If the amount of electrolyte in the standard solution is set to an amount close to the concentration of an ion contained in a sample, precision improves. Since the first region in which the working electrode is disposed and the second region in which the reference electrode is disposed are connected through the channel, the dispensed standard solution permeates toward the reference electrode as shown by the arrow in Fig. 2(b). When the standard solution reaches the electrolyte layer, the standard solution dissolves the electrolyte and is then supplied to the reference electrode. Therefore, the standard solution is supplied to the reference electrode with the chloride ion concentration in the solution being close to the saturation concentration. Although the standard solution may be dispensed at any point in the channel region, dispensing onto (or near) the working electrode as shown in Fig. 2(a) enables more stable measurement. The amount of dispensing is preferably such that most of the dispensed standard solution permeates to the reference electrode side, leaving only a minimum amount on the working electrode.

After the dispensed standard solution has reached the reference electrode and the working electrode, the potential difference between the working electrode and the reference electrode can be measured with a potentiostat or the like.

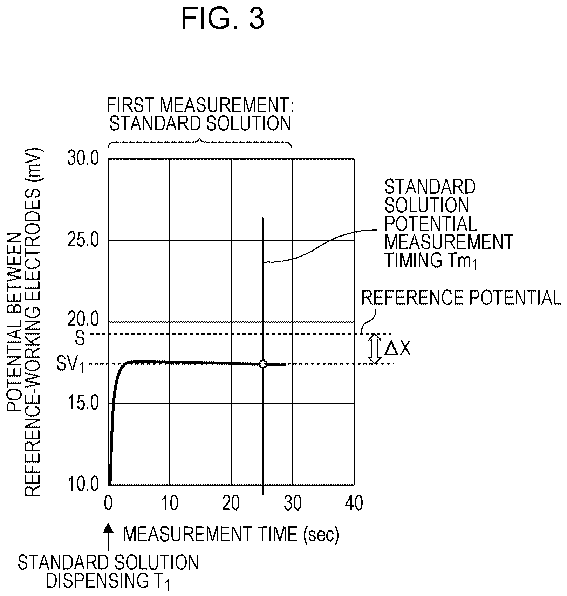

The time profile of the potential during this process is shown in Fig. 3. At a timing when the potential has become sufficiently stable in Fig. 3, a measurement potential SV₁ (first potential difference information) corresponding to the ion concentration in the standard solution is measured.

Since the ion concentration of the standard solution subjected to the measurement is known, a reference potential (S) to be measured is also naturally determined. The difference between the reference potential S and the measurement potential SV₁ is a differential potential ΔX specific to the measuring device. The differential potential ΔX is also a kind of first potential difference information because it is potential difference information based on the potential difference measurement using the standard solution.

### <Second Potential Difference Measurement (Second Step)>

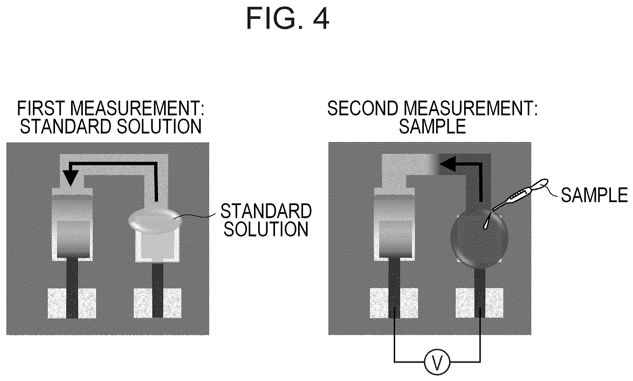

Next, as illustrated in Fig. 4, a sample such as serum is dispensed onto the working electrode or near the working electrode. Since it is after the first potential difference measurement, the working electrode is in a state of being covered by the standard solution, but by dispensing the sample, the sample displaces and replaces the standard solution around the working electrode. Although a small amount of the standard solution may remain on the working electrode, the amount of the remaining standard solution is at a certain level reflecting the shape of the measuring device, etc. and thus is correctable. When the standard solution is dispensed onto or near the working electrode in the first potential difference measurement, the amount of the standard solution remaining on the working electrode is less variable, thus leading to correction with higher precision. "Near the working electrode" refers to an area where the sample partially lies on the ion-selective membrane covering the working electrode.

On the other hand, the reference electrode is already supplied with the standard solution in the first potential difference measurement, and exhibits a stable potential. Thus, if the sample has replaced the standard solution on the working electrode, the potential difference between the working electrode and the reference electrode can be measured in a stable manner.

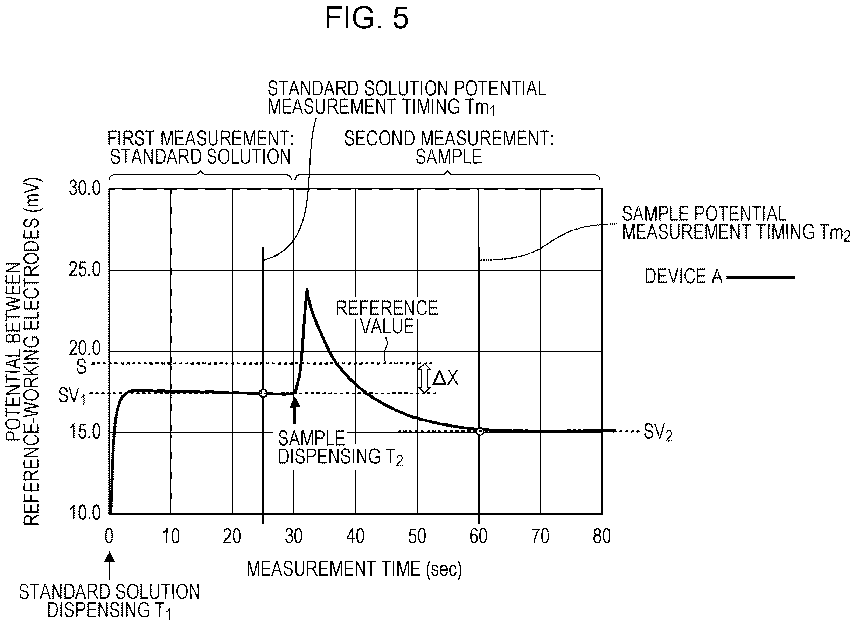

The change in potential with respect to the change in time during a period including the second potential difference measurement is shown in Fig. 5. After the sample is dispensed, a potential corresponding to the concentration of the target ion in the sample begins to be measured, and after the potential has become stable, a sample potential SV₂ (second potential difference information) is measured.

### <Correction Step>

Since it is known from the first potential difference measurement that this device shows a measured value deviated by ΔX from the reference value, it follows that the sample potential SV₂ is also measured with a deviation of ΔX. Hence, a value SV₃ (= sample potential SV₂ + ΔX) obtained by correcting the deviation, that is, shifting the potential profile in Fig. 5 by ΔX is a true value with the device-specific deviation eliminated. This true value (potential difference) is the "data on an electrolyte concentration of the sample" obtained using the first potential difference information and the second potential difference information.

As described above, an accurate electrolyte concentration of the sample can be obtained by using the first potential difference information and the second potential difference information.

While the measurement potential SV₁ has been treated as the "first potential difference information", and the sample potential SV₂ has been treated as the "second potential difference information" in the above description, the present invention is not limited to this combination. For example, a method in which the differential potential ΔX is directly obtained as the first potential difference information is also included in the present invention. Any configuration in which the electrolyte concentration data of the sample is obtained in a manner that the measurement potential SV₁ and the sample potential SV₂ are obtained (it is not necessary to explicitly extract each data) and the reference potential S of the standard solution is used is included in the present invention.

The "data on an electrolyte concentration of the sample" is not limited to the above-described "true value (potential difference)", and may be an "electrolyte concentration" value calculated based thereon or another value reflecting the "electrolyte concentration".

As described above, in the present invention, the sample is dispensed onto or near the working electrode in the second potential difference measurement, whereby the sample displaces and replaces the standard solution around the working electrode. In this case, since it is only necessary to replace only the area near the working electrode with the sample, an accurate potential difference measurement can be performed stably and quickly. Furthermore, it is also possible to reduce the amount of the sample used. In the related art, correction using potential difference information of a standard solution and potential difference information of a sample requires removal of the standard solution after the measurement using the standard solution, but in the present invention, such an operation is not necessary, and time and cost can be reduced.

Hereinafter, advantageous effects of the present invention will be described.

### EXAMPLES

### <Comparative Example 1>

A standard solution dispensed on the reference electrode side and a sample dispensed on the working electrode side are mixed with each other in an intermediate channel to enable measurement of a potential difference, whereby the electrolyte concentration of the sample can be measured. In this case, if a chloride solution of known concentration (e.g., 1 mol/L solution of NaCl) is used as the standard solution, it is not necessary to provide a chloride layer upstream of the reference electrode.

In this case, individual differences among measuring devices cannot be corrected, and thus the precision is poor due to variation among the measuring devices.

### <Comparative Example 2>

A standard solution is dispensed into a channel region intermediate between a working electrode and a reference electrode, and after the standard solution has reached the working electrode and the reference electrode, a first potential difference measurement is performed, after which a sample is dispensed similarly into the intermediate channel region, and a second potential difference measurement is performed.

In this case, the sample may take time to displace the standard solution and reach the working electrode or may fail to reach the working electrode. In addition, the amount of the sample tends to increase.

### <Example 1>

In this Example, an aqueous solution having
a NaCl concentration of 96 mmol/L,
a KCl concentration of 4 mmol/L, and
a NaHCO₃ concentration of 24 mmol/L
is used as a standard solution.

The concentrations of ions in the standard solution are as follows:
Na⁺ concentration, 120 mmol/L;
K⁺ concentration, 4 mmol/L;
Cl⁻ concentration, 100 mmol/L.

The amount of electrolyte in the standard solution is set to an amount close to the concentration of an ion contained in a sample.

As a measuring device, a measuring device for selecting potassium ions (K⁺) having a structure shown in Fig. 1B is used.

As a reference electrode and a working electrode, Ag/AgCl electrodes formed by printing Ag/AgCl paste on a substrate by screen printing and then firing the paste were used.

In this Example, a mixed solution of the following components and cyclohexanone was applied onto the working electrode by an ink-jet method, thereby preparing an ion-selective membrane for K⁺ ions.
· Ionophore: valinomycin
· Anion scavenger: potassium tetraphenylborate (KTPB)
·Plasticizer: bis(2-ethylhexyl) sebacate (DOS)
·Polymeric agent: polyvinyl chloride (PVC)

First, the standard solution is dispensed onto the working electrode of the measuring device, and a potential difference generated according to the concentration of K⁺ is measured for 30 seconds (first potential difference measurement). Thereafter, a sample containing K⁺ (human serum, Cosmo Bio Co., Ltd.) is dispensed onto the working electrode of the measuring device (Fig. 4), and a change in potential with time is measured likewise (second potential difference measurement). The potential at 30 seconds after the dispensing of the sample is extracted as a sample potential SV₂.

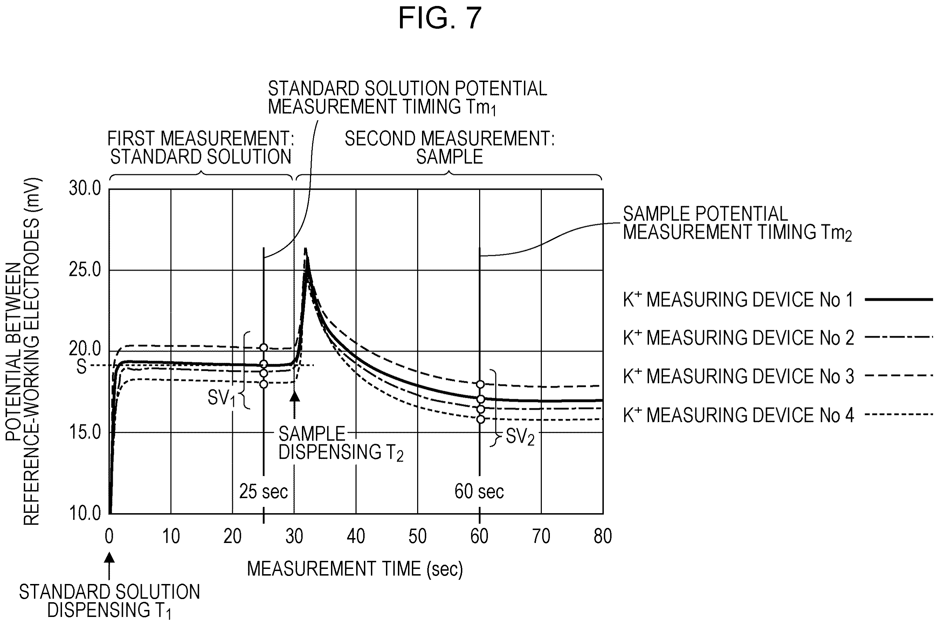

This measurement was performed using four K⁺ measuring devices No. 1 to No. 4 to obtain potential change data shown in Fig. 7.

Upon review of the potentials (measurement potentials SV₁: first potential difference information (primary information)) at a point in time when the potentials have become sufficiently stable (25 sec after standard solution dispensing) in the first potential difference measurement, it can be seen that slightly different potentials are measured by the devices.

In this configuration, the potential (reference potential) in the case where the standard solution (K⁺ concentration: 4 mmol/L) is used is 19.0 mV.

However, the potentials (measurement potentials SV₁) measured by the devices were as follows:
K⁺ measuring device No 1: 19.0 mV
K⁺ measuring device No 2: 18.7 mV
K⁺ measuring device No 3: 20.1 mV
K⁺ measuring device No 4: 17.7 mV.

Differential potentials ΔX (first potential difference information (secondary information)), i.e., deviations from the reference potential 19.0 mV, were as follows:
K⁺ measuring device No 1: 0 mV
K⁺ measuring device No 2: -0.3 mV
K⁺ measuring device No 3: 1.1 mV
K⁺ measuring device No 4: -1.3 mV.

Thereafter (T2, 30 seconds after the dispensing of the standard solution), the sample was dispensed onto the working electrode, and potentials (sample potentials SV₂: second potential difference information) at a point in time when sufficiently stable potentials were obtained (30 seconds after the dispensing of the sample) were as follows:
K⁺ measuring device No 1: 16.8 mV
K⁺ measuring device No 2: 16.4 mV
K⁺ measuring device No 3: 17.6 mV
K⁺ measuring device No 4: 15.7 mV.

The variation in the sample potential among the devices was substantially the same as that in the above differential potential ΔX.

Next, the sample potentials SV₂ are corrected using the differential potentials ΔX. This step corresponds to the "step of obtaining electrolyte concentration data of the sample using the first potential difference information and the second potential difference information". As a result of the correction, corrected potentials (corresponding to the "electrolyte concentration data") obtained using the devices are as follows:
K⁺ measuring device No 1: 16.8 mV
K⁺ measuring device No 2: 16.7 mV
K⁺ measuring device No 3: 16.6 mV
K⁺ measuring device No 4: 16.9 mV.

As described above, the potentials after the correction are substantially the same for all the devices. This variation (difference between the maximum value and the minimum value of the potentials after the correction: 0.3 mV), when converted to a K⁺ concentration, corresponds to 0.05 mmol/L, confirming that stable measurement has been achieved.

Thus, according to the measurement method of the present invention, individual differences among measuring devices, if present, can be corrected, and measurement with high repeatability (variation precision) can be performed on the same sample.

### <Example 2>

In this Example, a measuring device for selecting sodium ions (Na⁺) is used.

For the measuring device used in this Example, an ion-selective membrane for selecting Na⁺ was used. Descriptions that are the same as in Example 1, such as the configuration outline of the measuring device, are omitted.

Materials used for the ion-selective membrane for selecting Na⁺ are as follows:
·Ionophore: 12C4 (12-crown-4-ether)
· Anion scavenger: sodium tetraphenylborate (NaTPB)
·Plasticizer: bis(2-ethylhexyl) sebacate (DOS)
·Polymeric agent: polyvinyl chloride (PVC).

These were mixed with cyclohexanone, and the mixture was applied onto the working electrode by an ink-jet method, thereby preparing an ion-selective membrane for Na⁺ ions.

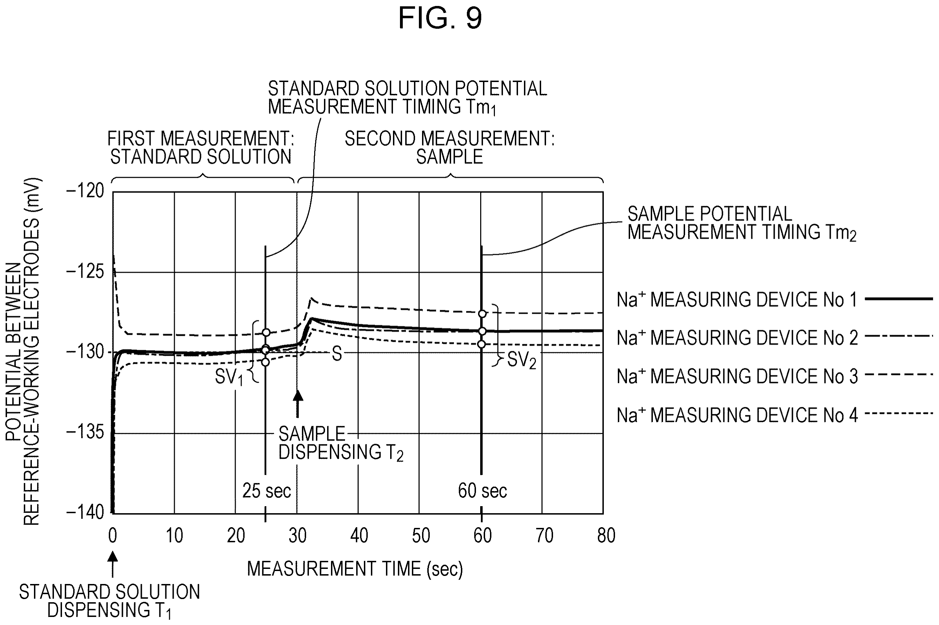

Using the standard solution used in Example 1 and a sample containing Na⁺ (human serum, Cosmo Bio Co., Ltd.), the same measurement as in Example 1 was performed using four Na⁺ measuring devices No. 1 to No. 4 to obtain potential change data shown in Fig. 9.

Upon review of the potentials (measurement potentials SV₁: first potential difference information (primary information)) at a point in time when the potentials have become sufficiently stable (25 sec after standard solution dispensing) in the first potential difference measurement, slightly different potentials are measured by the devices as in Example 1.

In this configuration, the potential (reference potential) in the case where the standard solution (Na⁺ concentration: 120 mmol/L) is used is -130.0 mV.

However, the potentials (measurement potentials SV₁) measured by the devices were as follows:
Na⁺ measuring device No. 1: -129.9 mV
Na⁺ measuring device No. 2: -129.9 mV
Na⁺ measuring device No. 3: -128.6 mV
Na⁺ measuring device No. 4: -130.7 mV.

Differential potentials ΔX (first potential difference information (secondary information)), i.e., deviations from the reference potential -130.0 mV, were as follows:
Na⁺ measuring device No. 1: 0.1 mV
Na⁺ measuring device No. 2: 0.1 mV
Na⁺ measuring device No. 3: 1.4 mV
Na⁺ measuring device No. 4: -0.7 mV.

Potentials (sample potentials SV₂: second potential difference information) at 30 seconds after the sample dispensing were as follows:
Na⁺ measuring device No. 1: -128.6 mV
Na⁺ measuring device No. 2: -128.6 mV
Na⁺ measuring device No. 3: -127.2 mV
Na⁺ measuring device No. 4: -129.7 mV.

The variation among the devices was substantially the same as that in the above differential potential ΔX as in Example 1.

Next, the sample potentials SV₂ are corrected using the differential potentials ΔX, and as a result, corrected potentials (electrolyte concentration data) obtained using the devices are as follows:
Na⁺ measuring device No. 1: -128.7 mV
Na⁺ measuring device No. 2: -128.7 mV
Na⁺ measuring device No. 3: -128.6 mV
Na⁺ measuring device No. 4: -129.0 mV.

As described above, the potentials after the correction are substantially the same for all the devices.

This variation (difference between the maximum value and the minimum value of the potentials after the correction: 0.4 mV), when converted to a Na⁺ concentration, corresponds to 2.0 mmol/L, confirming that stable measurement has been achieved.

### <Example 3>

In this Example, a measuring device for selecting chloride ions (Cl⁻) is used.

Descriptions that are the same as in Example 1, such as the configuration outline of the measuring device, are omitted.

When a Ag/AgCl electrode is used, Cl⁻ can be selected without providing an ion-selective membrane. Thus, the ion-selective membrane is not necessarily required, and in this Example, the measuring device was not provided with an ion-selective membrane on the working electrode. To enhance the performance of the Ag/AgCl electrode, such as Cl⁻ selectivity, the Ag/AgCl surface can be modified with a chelating agent or the like.

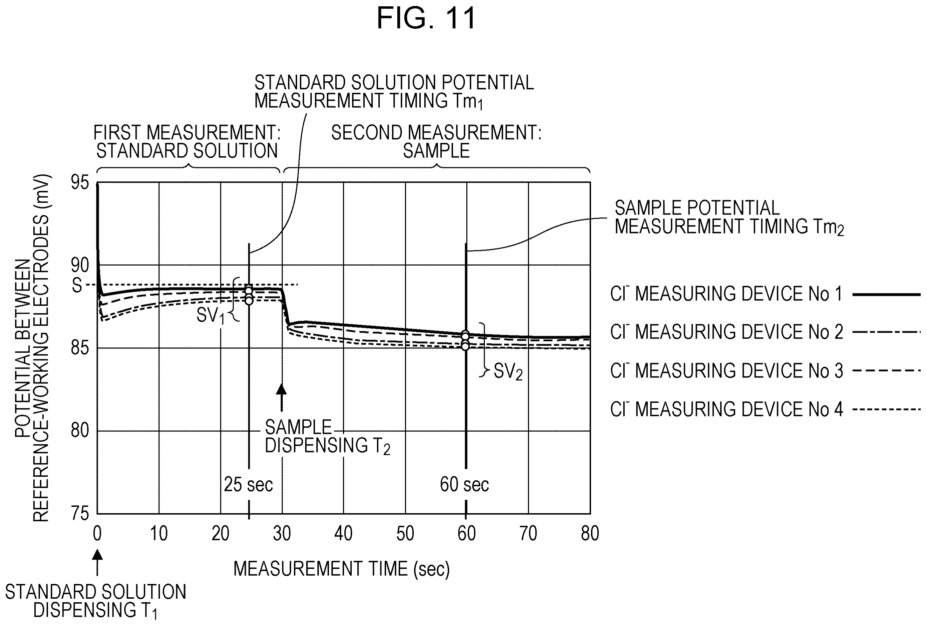

Using the standard solution used in Example 1 and a sample containing Cl⁻ (human serum, Cosmo Bio Co., Ltd.), the same measurement as in Example 1 was performed using four Cl⁻ measuring devices No. 1 to No. 4 to obtain potential change data shown in Fig. 11.

Upon review of the potentials (measurement potentials SV₁: first potential difference information (primary information)) at a point in time when the potentials have become sufficiently stable (25 sec after standard solution dispensing) in the first potential difference measurement, slightly different potentials are measured by the devices as in Example 1.

In this configuration, the potential (reference potential) in the case where the standard solution (Cl⁻ concentration: 100 mmol/L) is used is 88.5 mV.

However, the potentials (measurement potentials SV₁) measured by the devices were as follows:
Cl⁻ measuring device No. 1: 88.4 mV
Cl⁻ measuring device No. 2: 87.9 mV
Cl⁻ measuring device No. 3: 88.3 mV
Cl⁻ measuring device No. 4: 87.8 mV.

Differential potentials ΔX (first potential difference information (secondary information)), i.e., deviations from the reference potential 88.5 mV, were as follows:
Cl⁻ measuring device No. 1: -0.1 mV
Cl⁻ measuring device No. 2: -0.6 mV
Cl⁻ measuring device No. 3: -0.2 mV
Cl⁻ measuring device No. 4: -0.7 mV.

Potentials (sample potentials SV₂: second potential difference information) at 30 seconds after the sample dispensing were as follows:
Cl⁻ measuring device No. 1: 85.8 mV
Cl⁻ measuring device No. 2: 85.2 mV
Cl⁻ measuring device No. 3: 85.7 mV
Cl⁻ measuring device No. 4: 85.1 mV.

The variation among the devices was substantially the same as that in the above differential potential ΔX as in Example 1.

Next, the sample potentials SV₂ are corrected using the differential potentials ΔX, and as a result, corrected potentials (electrolyte concentration data) obtained using the devices are as follows:
Cl⁻ measuring device No. 1: 85.9 mV
Cl⁻ measuring device No. 2: 85.8 mV
Cl⁻ measuring device No. 3: 85.9 mV
Cl⁻ measuring device No. 4: 85.8 mV.

As described above, the potentials after the correction are substantially the same for all the devices.

This variation (difference between the maximum value and the minimum value of the potentials after the correction: 0.2 mV), when converted to a Cl⁻ concentration, corresponds to 1.0 mmol/L, confirming that stable measurement has been achieved.

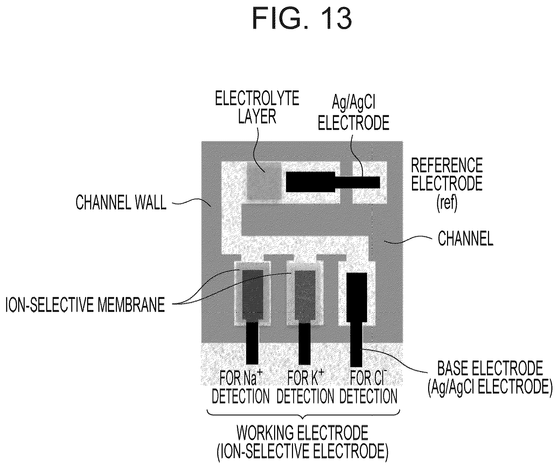

A channel configuration of a measuring device that simultaneously measures a plurality of ion concentrations is illustrated in Fig. 13. When such a measuring device is used, for example, concentration data of potassium ions, sodium ions, and chloride ions can be obtained at a time.

The present invention is not limited to the above embodiments, and various alterations and modifications can be made without departing from the spirit and scope of the present invention. Accordingly, the following claims are attached to make public the scope of the present invention.

This application claims the benefit of Japanese Patent Application No. 2023-040808 filed March 15, 2023, which is hereby incorporated by reference in its entirety. Reference Signs List

1 channel (filter paper portion)
2 channel wall (image forming portion = toner permeation portion)
3 reference electrode
3a electrolyte layer
3b reference electrode side base electrode Ag/AgCl
4, 7 commercially available reference electrode
5 sample
6 working (ion-selective) electrode
6a ion-selective membrane
6b ion selection side base electrode

## Claims

1. An electrolyte concentration measuring method that is a measuring method for measuring an electrolyte concentration of a sample using a measuring device, wherein
the measuring device has a channel region defined by a channel wall provided inside a porous substrate,
the channel region includes a first region, a second region, and a channel connecting the first region and the second region,
a working electrode is disposed in the first region, and
a reference electrode is disposed in the second region,
the measuring method comprising:
a first step of dispensing a standard solution of known concentration into the channel region and obtaining, after the standard solution has reached the reference electrode and the working electrode, first potential difference information based on a potential difference between the reference electrode and the working electrode;
a second step of dispensing the sample onto the working electrode or near the working electrode and obtaining second potential difference information based on a potential difference between the reference electrode and the working electrode; and
a step of obtaining data on an electrolyte concentration of the sample using the first potential difference information and the second potential difference information.

2. The electrolyte concentration measuring method according to Claim 1, wherein the standard solution is dispensed onto the working electrode or near the working electrode.

3. The electrolyte concentration measuring method according to Claim 1 or 2, wherein an ion-selective membrane containing a component having ion selectivity is present on a surface of the working electrode.

4. The electrolyte concentration measuring method according to Claim 1 or 2, wherein the standard solution is a solution containing a predetermined amount of an electrolyte contained in the sample.
